# EUROPÄISCHE PATENTSCHRIFT

(11) **EP 2 977 622 B1**
(45) Veröffentlichungstag und Bekanntmachung des Hinweises auf die Patenterteilung: **12.09.2018**
(21) Anmeldenummer: 15177420.5
(22) Anmeldetag: 20.07.2015
(51) Int. Cl.: F16B 5/06

(54) **HALTETEIL, FLÄCHIGE SCHUTZEINRICHTUNG SOWIE VERFAHREN ZUR HERSTELLUNG VON HALTETEIL UND SCHUTZEINRICHTUNG**
HOLDING ELEMENT, FLAT PROTECTIVE DEVICE AND METHOD FOR THE PREPARATION OF HOLDING ELEMENT AND PROTECTION DEVICE
ÉLEMENT DE RETENUE, DISPOSITIF DE PROTECTION PLAT ET PROCEDE DE FABRICATION D'ELEMENT DE RETENUE ET DISPOSITIF DE PROTECTION

(30) Priorität: 23.07.2014 DE 102014109467
(43) Veröffentlichungstag der Anmeldung: 27.01.2016
(73) Patentinhaber: MHZ HACHTEL GmbH & Co. KG, 70771 Leinfelden-Echterdingen (DE)
(72) Erfinder: Lindfeld, Werner, 73636 Frickenhausen (DE); Hachtel, Jochen, 97990 Weikersheim (DE)
(74) Vertreter: advotec.

(56) Entgegenhaltungen:
- DE-C- 518 998
- US-A1- 2001 027 848
- US-A1- 2003 097 709
- US-B1- 8 176 965

## Beschreibung

Die Erfindung betrifft ein Halteteil für eine flächige Schutzeinrichtung, eine flächige Schutzeinrichtung mit einem solchen Halteteil sowie ein Verfahren zur Herstellung des Halteteils.

Aus dem Stand der Technik ist es bekannt, Führungselemente einzusetzen, um eine Flächenbahn in einer Führungsschiene zu führen, beispielsweise um einen einstellbaren Sonnenschutz zu realisieren. Hierbei ist es wichtig, eine starke und reißfeste Verbindung zwischen den Gleitern und der Flächenbahn zu erhalten. Insbesondere bei einem im Außenbereich montierten Sonnenschutz kann es bei Starkwind nämlich zu einer großen Punktlast, d. h. einem starken Zug an den Verbindungspunkten der Halteteile zu der Flächenbahn kommen. Aber auch im Innenbereich angeordnete flächige Schutzeinrichtungen, insbesondere Vorhänge, können großen Belastungen ausgesetzt sein, beispielsweise wenn ein Kind an der Flächenbahn zieht. Unter einer Flächenbahn wird dabei erfindungsgemäß jede flächige gewebte oder nicht gewebte Bahn, beispielsweise eine Textilbahn oder Folie, verstanden. Besonders bevorzugt handelt es sich bei der Flächenbahn um eine Textilbahn.

Aus der DE 518 998 C Verdeck für ein Kraftfahrzeug bekannt, dessen Dachstoff an den Seitenkanten mit Haltegliedern ausgestattet sind, die in einer kanalförmigen Führung aus Metall gehalten werden. Zur Befestigung der Halteglieder an dem Dachstoff werden die Halteglieder formschlüssig auf eine Verdickung an der Seitenkanten des Dachstoffs aufgeklemmt. Diese Art der Befestigung hat den Nachteil, dass eine aufwendige Einzelbearbeitung der einzelnen Halteglieder erforderlich ist. Außerdem sind relativ dicke Halteglieder erforderlich.

Aus der US 6,824,637 B2 ist es bekannt geworden, eine Flächenbahn zum Schutz vor Ausreißen an ihren Außenkanten zu falten und zu vernähen bzw. zu verkleben.

Die US 2003/0097709 A1, die als nächstkommender Stand der Technik angesehen wird, beschreibt eine Apparatur zur Abdeckung eines Schwimmbeckens. Eine planenartige Schwimmbeckenabdeckung ist randseitig mit einem Gewebe versehen, das ein Seil oder Füllelement umgreift und über zwei Laschen mit der Schwimmbeckenabdeckung verschweißt ist.

Die US 8,176,965 B1 beschreibt eine Hurricane-Schutz-Abschirmung, wobei auf einem Abschirmmaterial auf der Vorder- und Rückseite Verstärkungsstreifen angeordnet sind, die durch Heißverschweißungen befestigt werden. Das Abschirmmaterial wird im Bereich der Verstärkungsstreifen mit Klemmbacken gehalten.

Die US 2001/0027848 A1 beschreibt eine Apparatur und ein Verfahren zum Abdichten einer Gebäudeöffnung gegen Wind. Ein dreilagiger Vorhang ist am Rand umgeschlagen, wobei der umgeschlagene Bereich auf dem übrigen Vorhang durch Vernähen oder Kleben befestigt ist. Der umgeschlagene Rand des Vorhangs ist in einer Schiene angeordnet.

Aufgabe der vorliegenden Erfindung ist es demgegenüber, ein Halteteil für eine flächige Schutzeinrichtung und ein Verfahren zur Herstellung eines solchen Gleiters bereitzustellen, der/das eine sehr reißfeste Verbindung zwischen dem Halteteil und einer Flächenbahn der Schutzeinrichtung ermöglicht.

Diese Aufgabe wird erfindungsgemäß durch ein Halteteil gemäß Anspruch 1, ein Verfahren zur Herstellung eines solchen Halteteils gemäß Anspruch 6 und eine flächige Schutzeinrichtung gemäß Anspruch 8 gelöst. Die Unteransprüche geben bevorzugte Weiterbildungen wieder.

Das erfindungsgemäße Halteteil umfasst eine erste Fahne aus einem flächigen Material und ein Führungselement, das an die erste Fahne angebracht ist, wobei die erste Fahne über eine Klebeverbindung und/oder eine materialschlüssige Verbindung mit einer Flächenbahn einer Schutzeinrichtung verbindbar ist.

Das Führungselement ist fest mit der ersten Fahne verbunden. Die erste Fahne weist ein flächiges Material, beispielsweise ein Folienstück oder - bevorzugt - ein gewebtes oder nicht gewebtes Textilstück auf. Weiterhin ist die erste Fahne flächig und fest mit einer Flächenbahn verbindbar. Somit kann erfindungsgemäß eine zwischen Führungselement und Flächenbahn auftretende Punktlast effektiv kompensiert werden.

Bei dem erfindungsgemäßen Halteteil ist das Führungselement in Form eines Gleiterkörpers aus Kunststoff ausgebildet, der an die mindestens eine Fahne, insbesondere die erste Fahne, angespritzt ist. Der Gleiterkörper ist so ausgebildet, dass er in einer Führungsschiene geführt werden und in dieser gleiten kann. Dazu wird der Gleiterkörper zur Anlage an der Innenseite der Führungsschiene gebracht. Der Gleiterkörper ist vorzugsweise an einem Randabschnitt des Fahnenmaterials angespritzt und umschließt die Außenkante dieses Randabschnitts. Der dem Gleiterkörper gegenüberliegende Randabschnitt des Fahnenmaterials dient zur Verbindung mit einer Flächenbahn einer Schutzeinrichtung. Unter dem Begriff "Anspritzen" wird dabei ein zumindest abschnittsweises formschlüssiges Anfügen des Gleiterkörpers an das Fahnenmaterial verstanden.

Vorzugsweise weist die erste Fahne zumindest einen Oberflächenabschnitt aus einem thermoplastischen Kunststoff auf. Durch den Oberflächenabschnitt aus thermoplastischem Kunststoff kann durch Erhitzen eine sehr feste Verbindung zu einer beliebigen Flächenbahn hergestellt werden.

Vorzugsweise weist die erste Fahne einseitig vollständig eine thermoplastische Kunststoffschicht auf. Das Halteteil kann dadurch besonders kostengünstig hergestellt werden. Die erste Fahne ist in diesem Fall zumindest einseitig vollflächig mit der thermoplastischen Kunststoffschicht versehen. Es ist auch möglich, dass die erste Fahne selbst aus einem thermoplastischen Kunststoff besteht. Hierdurch können die Fertigungskosten erheblich gesenkt werden.

In weiterer bevorzugter Ausgestaltung der Erfindung weist das Halteteil eine zweite Fahne auf, die über eine Klebeverbindung und/oder eine materialschlüssige Verbindung mit der Flächenbahn verbindbar ist. Hierdurch kann eine starke Verbindung zwischen Halteteil und Flächenbahn erzielt werden. Die zweite Fahne weist ein flächiges Material, beispielsweise ein Folienstück oder - bevorzugt - ein gewebtes oder nichtgewebtes Textilstück auf.

Vorzugsweise weist die zweite Fahne zumindest einen Oberflächenabschnitt aus einem thermoplastischen Kunststoff auf. Durch den Oberflächenabschnitt aus thermoplastischem Kunststoff kann durch Erhitzen auch über die zweite Fahne eine sehr feste Verbindung zu der Flächenbahn hergestellt werden.

Die erste Fahne sowie die fakultative zweite Fahne bestehen aus einem Fahnenmaterial. Bei dem Fahnenmaterial handelt es sich bevorzugt um ein Fahnentextil. Mehrere Fahnen, vorzugsweise zwei, können aus einem einteiligen, im Bereich des Führungselements umgelegten Fahnenmaterial ausgebildet sein. Hierdurch kann eine besonders starke Verbindung eines Halteteils zu einer Flächenbahn einer flächigen Schutzeinrichtung erreicht werden. Mit anderen Worten wird der Rand der Flächenbahn von dem Fahnenmaterial umschlossen. Hierdurch wird eine deutliche Erhöhung der Haltekraft erzielt.

Das erfindungsgemäße Halteteil kann spiegelsymmetrisch zur Ebene des Fahnenmaterials ausgebildet sein. Mit anderen Worten kann das Halteteil oberhalb und unterhalb einer durch das Fahnenmaterial definierten Ebene gleich ausgebildet sein. Hierdurch können Produktionskosten eingespart werden. Weiterhin kann das Halteteil ohne Rücksicht auf dessen Orientierung an einer Flächenbahn befestigt werden.

Um die Haltekraft des Halteteils zu erhöhen, kann das Führungselement einen Einleger umschließen. Vorzugsweise sind zwei Fahnen vorgesehen, die durch Umlegen eines Fahnenmaterials gebildet werden. Der Einleger ist dann vorzugsweise im Bereich der Umlegung des Fahnenmaterials angeordnet. Durch den Einleger kann eine Keilwirkung im Führungselement beim Ziehen an dem Fahnenmaterial erreicht werden.

Das Fahnenmaterial wird dadurch besonders sicher im Führungselement gehalten.

Bei einer Ausführungsform weist der Gleiterkörper mindestens eine gebogene Gleitfläche auf. Die Gleitfläche zeigt zum freien Ende der Fahne und ermöglicht ein reibungsarmes Gleiten des Gleiterkörpers innerhalb der Führungsschiene.

Darüber hinaus ist es vorteilhaft, wenn der Gleiterkörper mindestens eine federelastische Gleitfläche aufweist. Die Flächenbahn kann hierdurch flexibel in einer Führungsschiene geführt werden.

Bei den bisher beschriebenen Ausführungsformen ist als Einleger vorzugsweise eine Halteschnur oder ein Haltestab vorgesehen. Durch die Halteschnur bzw. den Haltestab kann eine Keilwirkung im Gleiterkörper beim Ziehen an dem Fahnenmaterial erreicht werden. Das Fahnenmaterial wird dadurch besonders sicher im Gleiterkörper gehalten.

Zur Herstellung von zuvor beschriebenen Halteteilen wird ein Verfahren mit folgenden Verfahrensschritten vorgeschlagen:
a) Bereitstellen mindestens eines Fahnenmaterials aus einem flächigen Material mit zumindest einem Oberflächenabschnitt aus einem thermoplastischen Kunststoff, wobei das Fahnenmaterial mindestens eine Fahne zur Verbindung des Führungselements mit einer Flächenbahn umfasst;
b) Anspritzen mehrerer Gleiterkörper aus Kunststoff an das Fahnenmaterial entlang der Längsrichtung des Fahnenmaterials;
c) Schneiden des Fahnenmaterials quer zur Längsrichtung des Fahnenmaterials, wobei durch das Schneiden zumindest ein einzelnes Halteteil abgetrennt wird.

Bei einer besonders bevorzugten Ausgestaltung der Erfindung ist das Fahnenmaterial einteilig ausgebildet und umfasst sowohl eine erste Fahne als auch eine zweite Fahne der Halteteile, wobei das Fahnenmaterial in einem Falzbereich umgelegt ist und der Gleiterkörper zumindest im Falzbereich an das Fahnenmaterial angespritzt ist. Hierdurch wird eine sehr feste Verbindung des Fahnenmaterials mit dem Gleiterkörper erreicht.

Das Fahnenmaterial ist vorzugsweise zumindest einseitig vollflächig mit einer thermoplastischen Kunststoffschicht versehen.

Eine kostengünstige Serienfertigung des Gleiters wird erzielt, wenn im Verfahrensschritt b) mehrere Gleiterkörper aus Kunststoff an das Fahnenmaterial angespritzt werden und das Fahnenmaterial in einem Verfahrensschritt c) quer zur Längsrichtung des Fahnenmaterials geschnitten wird, um zumindest ein einzelnes Halteteil abzutrennen.

Vorzugsweise werden mehrere Führungselemente zunächst einteilig an das Fahnenmaterial angespritzt und im Verfahrensschritt c) getrennt.

Eine erfindungsgemäße flächige Schutzeinrichtung umfasst eine Wickelwelle und eine Flächenbahn, die auf der Wickelwelle in einer Wickelrichtung aufrollbar ist, wobei zumindest an einem Randbereich der Flächenbahn mehrere der zuvor beschriebenen Halteteile angeordnet oder ausgebildet sind, deren Führungselemente in einer Führungsschiene der flächigen Schutzeinrichtung geführt sind.

Zur Herstellung einer solchen flächigen Schutzeinrichtung können folgende Verfahrensschritte vorgesehen sein:
A) Auflegen einer ersten Fahne des Halteteils auf die Oberseite des Randbereichs der Flächenbahn, und
B) Verbinden der Flächenbahn mit der ersten Fahne durch Erhitzen oder Ultraschallbehandeln der Flächenbahn und/oder der ersten Fahne.

Besonders bevorzugt wird im Verfahrensschritt A) eine zweite Fahne des Halteteils auf die Unterseite des Randbereichs der Flächenbahn aufgelegt und im Verfahrensschritt B) wird die Flächenbahn, die erste Fahne und/oder die zweite Fahne zur Verbindung der ersten Fahne und/oder der zweiten Fahne mit der Flächenbahn erhitzt und/oder mit Ultraschall behandelt.

Besonders bevorzugt wird ein Halteteil eingesetzt, dessen erste Fahne und/oder zweite Fahne eine thermoplastische Kunststoffschicht aufweist, wobei die Verbindung des Halteteils mit der Flächenbahn durch Erhitzen der ersten Fahne, der zweiten Fahne und/oder der Flächenbahn erfolgt. Mit anderen Worten kann das Verkleben bzw. Verschmelzen der Flächenbahn mit dem Halteteil durch eine Erwärmung der ersten Fahne, der zweiten Fahne und/oder der Flächenbahn erfolgen. In jedem Fall wird zumindest ein Oberflächenabschnitt aus einem thermoplastischen Kunststoff geschmolzen oder zumindest angeschmolzen, sodass eine materialschlüssige Verbindung des Halteteils mit der Flächenbahn erfolgt.

Durch das Vorsehen von zwei Fahnen kann die Festigkeit der Verbindung zwischen Halteteil und Flächenbahn verbessert werden. Die erste Fahne dient dabei zur Verbindung des Halteteils mit einer Oberseite und die zweite Fahne zur Verbindung des Halteteils mit einer Unterseite der Flächenbahn. Das Halteteil kann in diesem Fall mit der Oberseite und der Unterseite der Flächenbahn verbunden werden.

Weitere Merkmale und Vorteile der Erfindung ergeben sich aus der nachfolgenden detaillierten Beschreibung mehrerer Ausführungsbeispiele der Erfindung, anhand der Figuren der Zeichnung, die erfindungswesentliche Einzelheiten zeigt, sowie aus den Ansprüchen.

Die in der Zeichnung dargestellten Merkmale sind derart dargestellt, dass die erfindungsgemäßen Besonderheiten deutlich sichtbar gemacht werden können. Die verschiedenen Merkmale können je einzeln für sich oder zu mehreren in beliebigen Kombinationen bei Varianten der Erfindung verwirklicht sein.

Es zeigen:
- Fig. 1a: eine perspektivische Ansicht eines Halteteils;
- Fig. 1b: eine Draufsicht auf das Halteteil gemäß Fig. 1a;
- Fig. 2a: eine perspektivische Ansicht eines weiteren, nicht erfindungsgemäßen Halteteils;
- Fig. 2b: eine Draufsicht auf das Halteteil gemäß Fig. 2a;
- Fig. 2c: ein nicht erfindungsgemäßes Halteteil mit einem Verstärkungsplättchen;
- Fig. 2d: mehrere Halteteile gemäß Fig. 2c, welche an einem Textilabschnitt angebracht sind;
- Fig. 2e: eine Explosionsansicht eines Halteteils gemäß Fig. 2c;
- Fig. 3a: eine perspektivische Ansicht eines weiteren Halteteils;
- Fig. 3b: eine Draufsicht auf das Halteteil gemäß Fig. 3a;
- Fig. 3c: eine vergrößerte perspektivische Ansicht des Halteteils aus Fig. 3a;
- Fig. 4a-4c: jeweils eine Draufsicht auf ein Führungselement;
- Fig. 5: eine perspektivische Ansicht einer Flächenbahn mit mehreren Halteteilen;
- Fig. 6: eine Draufsicht auf eine Vielzahl von Halteteilen bei deren Herstellung;
- Fig. 7a: eine perspektivische Darstellung einer Vielzahl von Halteteilen bei deren Herstellung mit einer flächigen Fahne;
- Fig. 7b: eine perspektivische Darstellung einer Vielzahl von Halteteilen bei deren Herstellung mit zwei flächigen Fahnen;
- Fig. 7c: eine perspektivische Darstellung einer Vielzahl von Halteteilen bei deren Herstellung mit einer umgeschlagenen flächigen Fahne;
- Fig. 7d': eine perspektivische Darstellung einer Vielzahl von Halteteilen bei deren Herstellung mit einer umgeschlagenen flächigen Fahne und eingelegter Halteschnur;
- Fig. 8a: eine perspektivische Darstellung eines Halteteils mit einer Fahne;
- Fig. 8b: einen Längsschnitt durch das Halteteil gemäß Fig. 8a;
- Fig. 9a: eine perspektivische Darstellung eines Halteteils mit zwei Fahnen;
- Fig. 9b: einen Längsschnitt durch das Halteteil gemäß Fig. 9a;
- Fig. 10a: eine perspektivische Darstellung eines Halteteils mit zwei Fahnen aus einem einteiligen Fahnenmaterial;
- Fig. 10b: einen Längsschnitt durch das Halteteil gemäß Fig. 10a;
- Fig. 11a: eine perspektivische Darstellung eines Halteteils mit zwei Fahnen und einem Einleger; und
- Fig. 11b: einen Längsschnitt durch das Halteteil gemäß Fig. 11a.

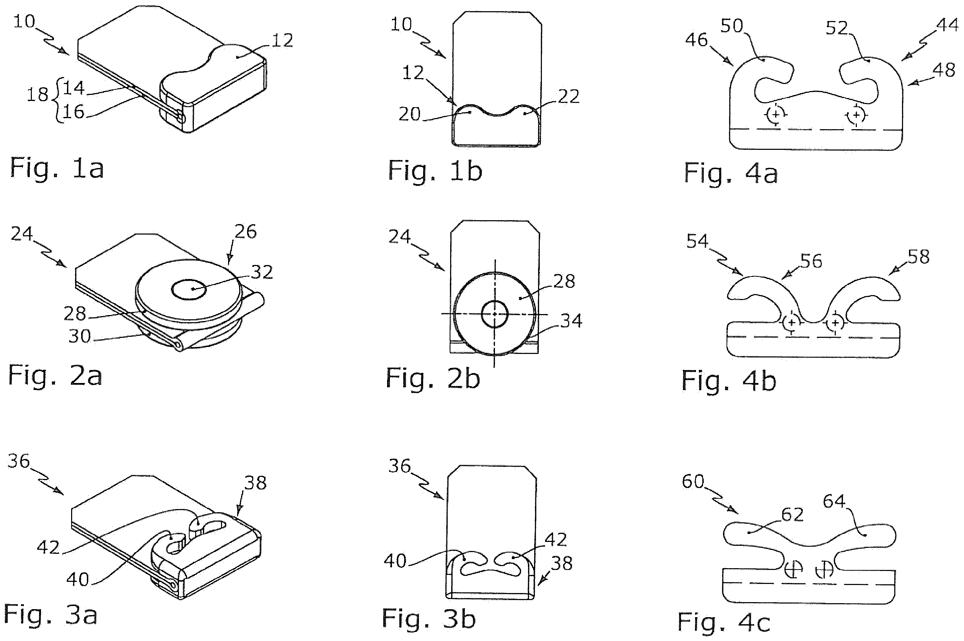

Fig. 1a zeigt ein erfindungsgemäßes Halteteil 10. Das Halteteil 10 weist ein Führungselement in Form eines Gleiterkörpers 12 auf, zwischen dem eine erste Fahne 14 und eine zweite Fahne 16 angeordnet sind. Die erste Fahne 14 und die zweite Fahne 16 bestehen aus einem einstückigen bzw. einteiligen Fahnenmaterial 18.

Fig. 1b zeigt das Halteteil 10 in einer Draufsicht. Aus Fig. 1b wird ersichtlich, dass der Gleiterkörper 12 eine erste gebogene Gleitfläche 20 und eine zweite gebogene Gleitfläche 22 aufweist. Die Gleitflächen 20, 22 dienen zur reibungsarmen Führung des Gleiterkörpers 12 an einer Innenseite einer Führungsschiene (nicht gezeigt).

Fig. 2a zeigt ein nicht erfindungsgemäßes Halteteil 24. Das Halteteil 24 ist identisch zu dem Halteteil 10 ausgebildet. Allerdings weist das Halteteil 24 ein Führungselement 26 mit zwei Gleitrollen 28, 30 auf. Die Gleitrollen 28, 30 sind jeweils an der Außenseiter einer Fahne (also auf der der anderen Fahne abgewandten Seite) angebracht und an einer gemeinsamen Achse 32 gelagert. Durch die Gleitrollen 28, 30 kann das Halteteil 24 besonders reibungsarm und geräuscharm an einer Führungsschiene geführt werden.

Fig. 2b zeigt das Halteteil 24 in einer Draufsicht. Aus Fig. 2b wird ersichtlich, dass die Gleitrolle 28 außenseitig eine Fase 34 aufweist, um das Einführen des Halteteils 24 in eine Führungsschiene zu erleichtern.

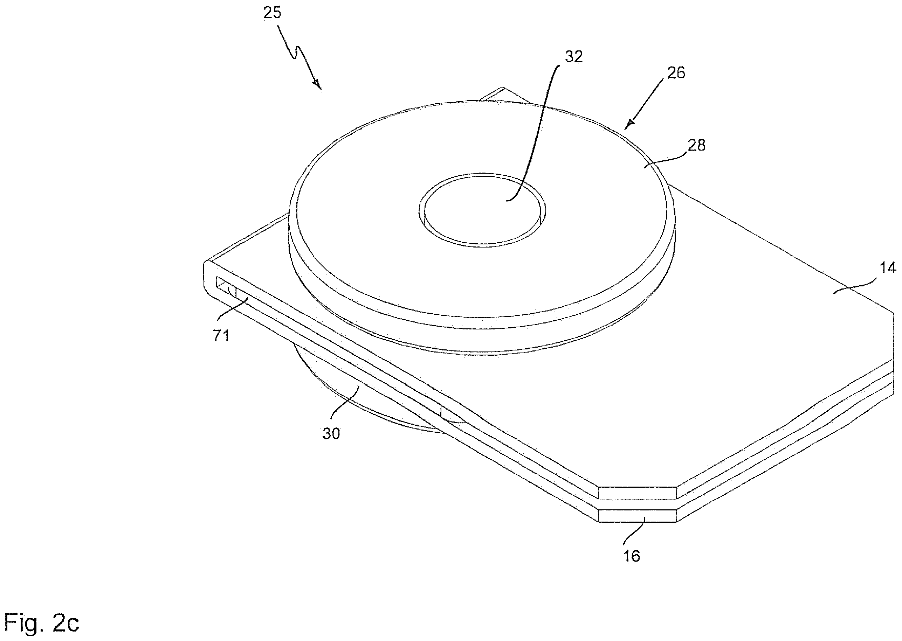

Fig. 2c zeigt eine detaillierte Ansicht eines nicht erfindungsgemäßen Halteteils 25. Das Halteteil 25 weist als Einleger ein Verstärkungsplättchen 71 (beispielsweise ein Edelstahlblech) auf, welches zwischen den beiden Fahnen 14, 16 angeordnet ist. Das in Fig. 2c gezeigte Verstärkungsplättchen 71 wird von einem Achselement 32 (Achsbolzen) durchgriffen und dient einerseits dazu, ein Herausreißen des Fahnenmaterials aus dem Führungselement 26 zu verhindern und kann darüber hinaus als Anschlag für die zwischen den Fahnen anzuordnende Flächenbahn dienen.

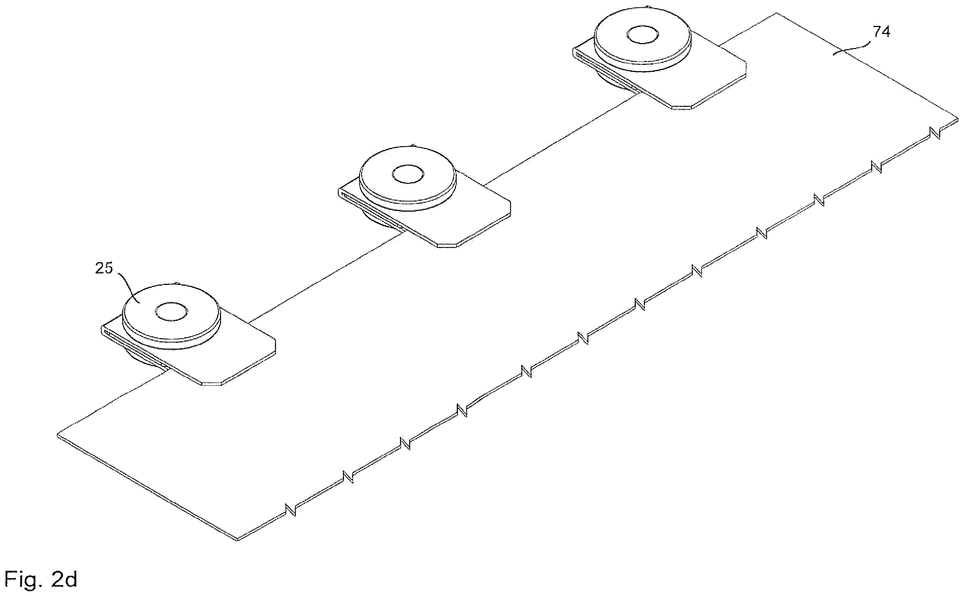

Eine Flächenbahn 74, an der mehrere derartige Halteteile 25 angebracht sind, ist in Fig. 2d gezeigt.

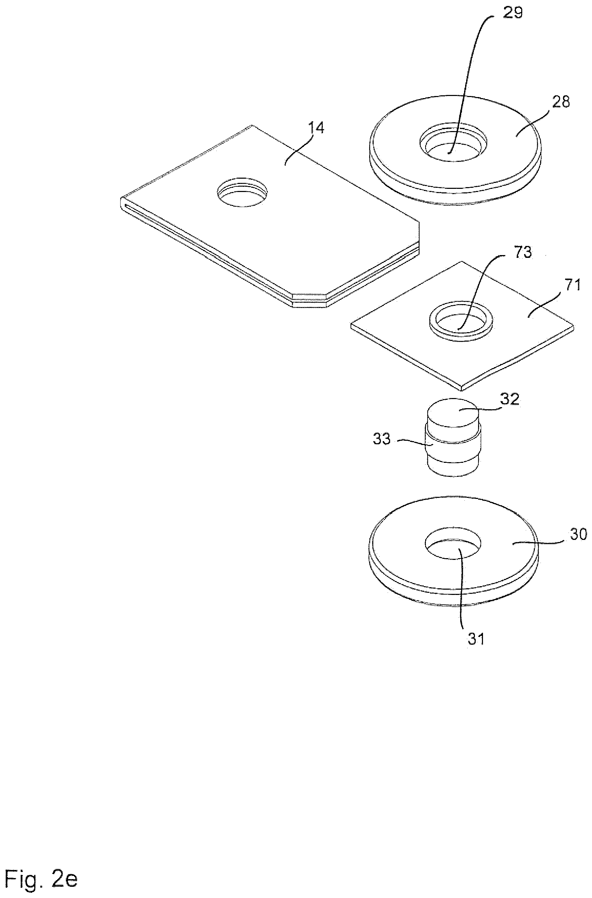

Die einzelnen Komponenten des Halteteils 25 sind in Fig. 2e gezeigt. Das Verstärkungsplättchen 71 weist eine durchgehende Ausnehmung 73 auf, die im zusammengebauten Zustand konzentrisch zu Ausnehmungen 29, 31 der Gleitrollen 28, 30 und denen der Fahnen 14, 16 angeordnet ist. Die Gleitrollen 28, 30, das Verstärkungsplättchen 72, 71 und die Fahnen 14, 16 werden mittels des Achselements 32 miteinander verbunden, das mit den Gleitrollen 28, 30 verklemmt oder verrastet werden kann.

Fig. 3a zeigt ein Halteteil 36. Das Halteteil 36 ist identisch zu dem Halteteil 10 ausgebildet. Allerdings weist das Halteteil 36 einen Gleiterkörper 38 als Führungselement mit federelastisch ausgebildeten Gleitflächen 40, 42 auf. Die Gleitflächen 40, 42 dienen der flexiblen Führung des Halteteils 36 an der Innenseite einer Führungsschiene.

Fig. 3b zeigt das Halteteil 36 in einer Draufsicht. Aus Fig. 3b wird ersichtlich, dass die federelastisch ausgebildeten Gleitflächen 40, 42 an Armen ausgebildet sind, die von den Außenseiten des Gleiterkörpers 38 nach innen gebogen ausgebildet sind.

Die zuvor beschriebenen Halteteile 10, 24, 36 sind symmetrisch zur einer zwischen der ersten Fahne 14 und der zweiten Fahne 16 (siehe Fig. 1a) verlaufenden Ebene ausgebildet. Mit anderen Worten sind die Halteteile 10, 24, 36 symmetrisch zu einer Flächenbahn ausgebildet, an der die Halteteile 10, 24, 36 befestigbar sind.

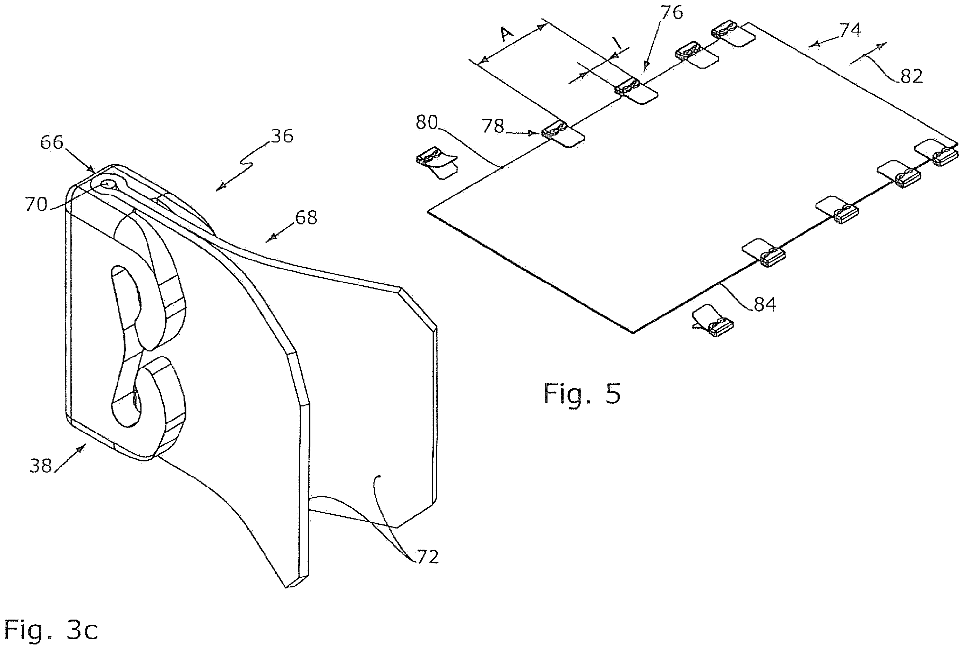

Fig. 3c zeigt eine vergrößerte Ansicht des aufgrund seiner kompakten und dadurch besonders stabilen Ausbildung bevorzugten Halteteils 36. Aus Fig. 3c wird ersichtlich, dass der Gleiterkörper 38 eine Ausnehmung 66 aufweist. In der Ausnehmung 66 ist ein Fahnenmaterial 68 umgelegt. Im Bereich der Umlegung des Fahnenmaterials 68 ist ein Einleger, z. B. eine Halteschnur 70 angeordnet. Durch die Halteschnur 70 wird das Fahnenmaterial 68 besonders effektiv vor einem Herausreißen aus dem Gleiterkörper 38 geschützt.

Die Innenseite des Fahnenmaterials 68 ist mit einem thermoplastischen Kunststoff 72 beschichtet. Durch den thermoplastischen Kunststoff 72 kann das Halteteil 36 besonders fest mit einer Flächenbahn aus beliebigem Material verbunden werden.

Fig. 4a - 4c zeigen verschiedene als Gleiterkörper 44, 54, 60 ausgebildete Führungselemente.

Der in Fig. 4a gezeigte Gleiterkörper 44 umfasst - ebenso wie der Gleiterkörper 38 gemäß Fig. 3b - von der Außenseite des Gleiterkörpers 44 nach innen gebogen ausgebildete Arme 46, 48. Die Arme 46, 48 weisen gebogene Gleitflächen 50, 52 auf.

Der in Fig. 4b gezeigte Gleiterkörper 54 weist Arme 56, 58 auf, die ebenfalls gebogene Gleitflächen umfassen. Die Arme 56, 58 sind von einer Innenseite des Gleiterkörpers 54 nach außen gebogen ausgebildet.

Der in Fig. 4c gezeigte Gleiterkörper 60 entspricht im Wesentlichen dem Gleiterkörper 54 gemäß Fig. 4b. Allerdings sind Arme 62, 64 flacher ausgebildet als die Arme 56, 58 des Halteteils 54. Durch die Ausbildung der Arme - hier der Arme 62, 64 des Gleiterkörpers 60 bzw. der Arme 56, 58 des Gleiterkörpers 54 - werden die elastischen Eigenschaften des Gleiterkörpers 54, 60 gewählt.

Die zuvor beschriebenen Gleiterkörper 44, 54, 60 können - analog zu den Führungselementen 12, 26, 38 - mit zumindest einer Fahne, insbesondere zwei Fahnen, versehen und dann als Halteteil verwendet werden.

Eine besonders starke Verbindung von Führungselement und Flächenbahn kann erzielt werden, wenn das Führungselement zumindest eine Bohrung mit einem Zapfen aufweist, der durch die Flächenbahn geführt ist. In den Fig. 4a - 4c sind an den Führungselementen 46, 54, 60 derlei Bohrungen mit Zapfen durch gestrichelte Kreise angedeutet.

Fig. 5 zeigt eine Flächenbahn 74 mit mehreren an der Flächenbahn 74 befestigten Halteteilen, von denen aus Gründen der Übersichtlichkeit nur ein erstes Halteteil 76 und ein zweites Halteteil 78 mit einem Bezugszeichen versehen sind. Die in Fig. 5 dargestellten Halteteile sind identisch mit dem Halteteil 36 (siehe Fig. 3c) ausgebildet. Das erste Halteteil 76 weist die Länge I auf und ist im Abstand A zu dem zweiten Halteteil 78 an einer ersten Außenkante 80 der Flächenbahn 74 angeordnet. Die Flächenbahn 74 mit den daran befestigten Halteteilen kann in Wickelrichtung auf eine Wickelwelle aufgerollt werden. Die Wickelrichtung ist in Fig. 5 durch einen Pfeil 82 angedeutet. Die erste Außenkante 80 verläuft in Wickelrichtung 82 der Flächenbahn 74. Ebenso verläuft eine zweite Außenkante 84 in Wickelrichtung der Flächenbahn 74.

Die Halteteile an der zweiten Außenkante 84 sind symmetrisch zu den Gleitern an der ersten Außenkante 80 angeordnet.

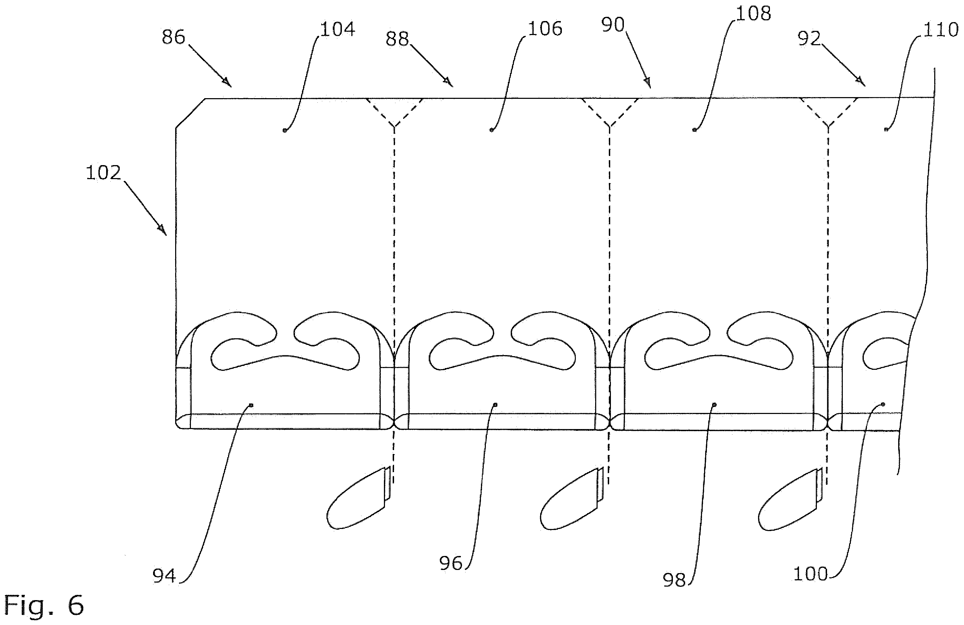

Fig. 6 zeigt mehrere Halteteile 86, 88, 90, 92 bei ihrer Herstellung. Die Halteteile 86, 88, 90, 92 weisen jeweils einen Gleiterkörper 94, 96, 98, 100 auf. Die Gleiterkörper 94, 96, 98, 100 sind einteilig ausgebildet. Die Gleiterkörper 94, 96, 98, 100 sind aus Kunststoff ausgebildet und werden vorzugsweise einteilig als Reihe von Gleiterkörpern 38 an ein Fahnenmaterial 102 angespritzt. Das Fahnenmaterial 102 umfasst in Fig. 6 sichtbare erste Fahnen 104, 106, 108, 110. Darüber hinaus können vorzugsweise identische, darunter liegende zweite Fahnen, die in Fig. 6 nicht sichtbar sind, vorgesehen sein. Das Fahnenmaterial 102 ist an seinen in Fig. 6 zueinander weisenden, innen liegenden Seiten vollständig mit einer thermoplastischen Kunststoffschicht versehen (vgl. die thermoplastische Klebeschicht 72 in Fig. 3c).

Nach dem Anspritzen der Gleiterkörper 94, 96, 98, 100 an das Fahnenmaterial 102 werden die Halteteile 86, 88, 90, 92 durch ein Trennverfahren, insbesondere durch Schneiden, entlang der gestrichelt eingezeichneten Linien getrennt. Das Trennen wird in Fig. 6 durch Cuttermesser angedeutet. Die Ecken des Fahnenmaterials 102 werden durch ein Schneidverfahren abgestumpft. Die so erhaltenen Halteteile 86, 88, 90, 92 sind identisch zu dem Halteteil 36 gemäß Fig. 3c ausgebildet.

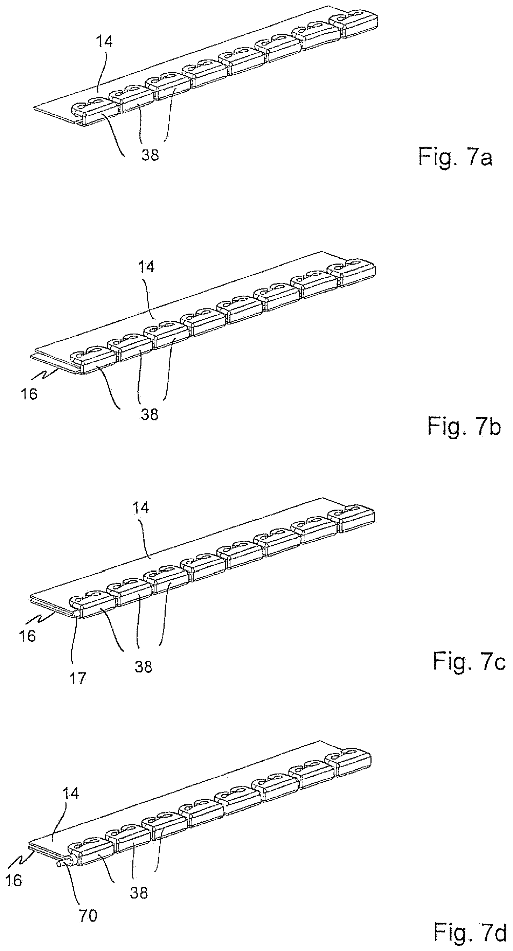

Fig. 7a - 7d zeigen verschiedene Möglichkeiten, wie die Fahnen 14, 16 einer Reihe von Gleiterkörpern 38 ausgeführt sein können. Bei der in Fig. 7a gezeigten Reihe von Gleiterkörpern 38 ist lediglich eine einzige Fahne 14 vorgesehen, an der die Gleiterkörper 38 angebracht sind. Fig. 7b zeigt eine Ausführungsform mit einer weiteren Fahne 16, wobei die beiden Fahnen 14, 16 von separaten Fahnenmaterialien gebildet werden. Fig. 7c zeigt eine Ausführungsform, bei denen die beiden Fahnen 14, 16 durch ein einziges (einstückiges) Fahnenmaterial gebildet werden, welches in einem Falzbereich 17 umgeschlagen ist, wobei die Gleiterkörper 38 um den Falzbereich 17 angespritzt sind. Fig. 7d zeigt eine Ausführungsform mit einem umgeschlagenen Fahnenmaterial gemäß Fig. 7c und einer in der Falzkante 17 des Fahnenmaterials eingelegten Halteschnur 70, die ein Herausziehen der Fahnen 14, 16 aus dem Gleiterkörper 38 verhindern soll.

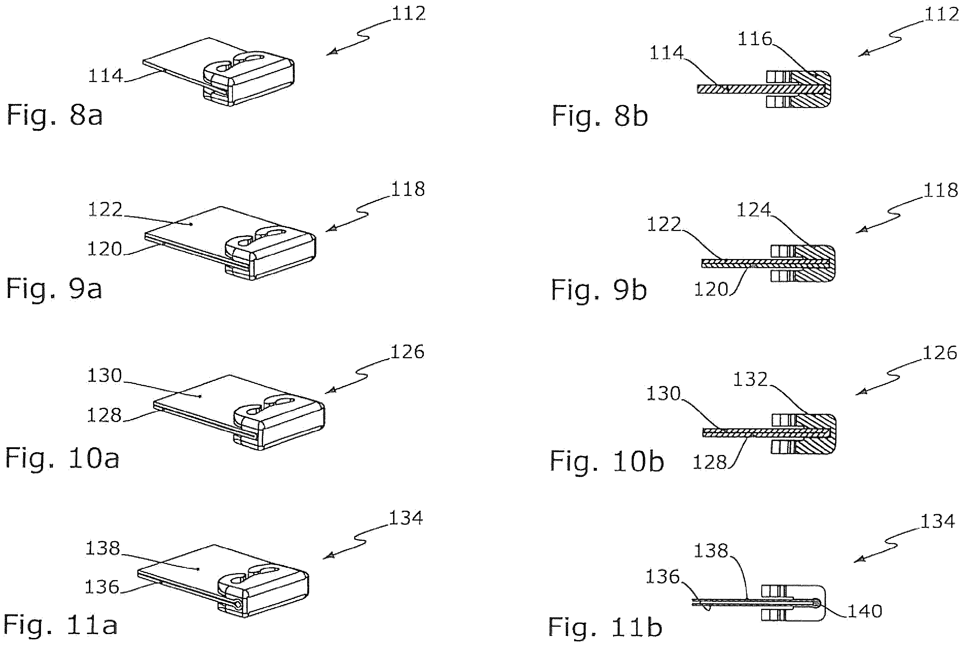

Die Fig. 8a - 11b zeigen zusammenfassend bevorzugte Varianten des erfindungsgemäßen Halteteils in perspektivischer bzw. geschnittener Ansicht.

Fig. 8a zeigt ein konstruktiv besonders einfaches und dadurch kostengünstig herstellbares Halteteil 112. Das Halteteil 112 weist eine einzige erste Fahne 114 auf. Die erste Fahne 114 liegt in Form eines Fahnentextils vor. Die erste Fahne 114 ist bevorzugt zumindest auf einer Flächenseite, insbesondere auf beiden Flächenseiten, mit einer thermoplastischen Kunststoffschicht versehen. Alternativ dazu kann die erste Fahne 114 vollständig aus einem thermoplastischen Kunststoff ausgebildet sein.

Fig. 8b zeigt das Halteteil 112, wobei aus Fig. 8b ersichtlich wird, dass an die erste Fahne 114 ein Führungselement 116 aus Kunststoff angespritzt ist.

Fig. 9a zeigt ein Halteteil 118, das dem Halteteil 112 gemäß Fig. 8a entspricht. Allerdings weist das Halteteil 118 eine erste Fahne 120 und eine zweite Fahne 122 auf. Die beiden Fahnen 120, 122 sind nicht endseitig miteinander verbunden.

Fig. 9b zeigt das Halteteil 118 gemäß Fig. 9a, wobei aus Fig. 9b ersichtlich wird, dass die beiden Fahnen 120, 122 stoßförmig aufeinander an ein Führungselement 124 angespritzt sind. Die beiden Fahnen 120, 122 sind bevorzugt aus einem textilen Fahnenmaterial ausgebildet und weisen an den einander zugewandten Flächeninnenseiten eine thermoplastische Kunststoffschicht auf.

Fig. 10a zeigt ein Halteteil 126, das dem Halteteil 118 gemäß Fig. 9a entspricht. Allerdings weist das Halteteil 126 eine erste Fahne 128 und eine zweite Fahne 130 auf, die aus einem einstückigen Fahnenmaterial ausgebildet sind.

Fig. 10b zeigt das Halteteil 126, wobei aus Fig. 10b ersichtlich wird, dass das Fahnenmaterial der Fahnen 128, 130 endseitig in einem Führungselement 132 umgelegt ist.

Fig. 11a zeigt ein Halteteil 134, das dem Halteteil 126 gemäß Fig. 10a entspricht, wobei eine erste Fahne 136 und eine zweite Fahne 138 einteilig aus einem einzigen endseitig umgelegten Fahnenmaterial ausgebildet sind.

Fig. 11b zeigt das Halteteil 134. Aus Fig. 11b wird ersichtlich, dass im Bereich der Umlegung des Fahnentextils ein Einleger 140 zwischen der ersten Fahne 136 und der zweiten Fahne 138 vorgesehen ist. Der Einleger 140 ist in Form einer Halteschnur ausgebildet.

Zusammenfassend betrifft die Erfindung ein Halteteil für eine flächige Schutzeinrichtung. Das Halteteil weist zumindest eine erste Fahne, vorzugsweise eine erste Fahne und eine zweite Fahne, auf, mit der/denen das Halteteil an einer Flächenbahn der flächigen Schutzeinrichtung befestigbar ist. Die erste Fahne und/oder die zweite Fahne weisen bevorzugt eine Schicht aus thermoplastischem Kunststoff auf, durch deren Schmelzen das Halteteil mit der Flächenbahn verbindbar ist. Zumindest die erste Fahne, vorzugsweise die erste Fahne und die zweite Fahne, ist/sind dabei mit einem Führungselement des Halteteils fest verbunden. Das Halteteil ist durch das Führungselement in einer Führungsschiene der flächigen Schutzeinrichtung führbar.

## Patentansprüche

1. Halteteil (10, 24, 25, 36, 76, 78, 86, 88, 90, 92, 112, 118, 126, 134) für eine flächige Schutzeinrichtung, wobei das Halteteil (10, 24, 25, 36, 76, 78, 86, 88, 90, 92, 112, 118, 126, 134) umfasst: eine erste Fahne (14, 104, 106, 108, 110, 114, 120, 128, 136) aus einem flächigen Material und ein Führungselement (12, 26, 38, 94, 96, 98, 100, 116, 124, 132), das an die erste Fahne (14, 104, 106, 108, 110, 114, 120, 128, 136) angebracht ist, wobei die erste Fahne (14, 104, 106, 108, 110, 114, 120, 128, 136) über eine Klebeverbindung und/oder eine materialschlüssige Verbindung mit einer Flächenbahn (74) der Schutzeinrichtung verbindbar ist, **dadurch gekennzeichnet, dass** das Führungselement (116, 124, 132) in Form eines Gleiterkörpers (12, 38, 94, 96, 98, 100) aus Kunststoff ausgebildet ist, der an die erste Fahne (14, 104, 106, 108, 110, 114, 120, 128, 136) angespritzt ist.

2. Halteteil nach Anspruch 1, **dadurch gekennzeichnet, dass** das Führungselement (12, 26, 38, 94, 96, 98, 100, 134) einen Einleger (70, 71, 140) umschließt.

3. Halteteil nach einem der vorhergehenden Ansprüche, **dadurch gekennzeichnet, dass** der Gleiterkörper (12) mindestens eine gebogene Gleitfläche (20, 22) aufweist.

4. Halteteil nach einem der vorhergehenden Ansprüche, **dadurch gekennzeichnet, dass** der Gleiterkörper (38, 94, 96, 98, 100) mindestens eine federelastische Gleitfläche (40, 42) aufweist.

5. Halteteil nach einem der Ansprüche 2 bis 4, **dadurch gekennzeichnet, dass** als Einleger (140) eine Halteschnur (70) oder ein Haltestab vorgesehen ist.

6. Verfahren zur Herstellung von Halteteilen nach einem der Ansprüche 1 bis 5, mit den Verfahrensschritten:
a) Bereitstellen mindestens eines Fahnenmaterials (68, 102) aus einem flächigen Material mit zumindest einem Oberflächenabschnitt aus einem thermoplastischen Kunststoff (72), wobei das Fahnenmaterial (68, 102) mindestens eine Fahne (14, 16, 104, 106, 108, 110, 114, 120, 122, 128, 130, 136, 138) zur Verbindung des Führungselements (10, 36, 76, 78, 86, 88, 90, 92, 116, 124, 132, 140) mit einer Flächenbahn (74) umfasst;
b) Anspritzen mehrerer Gleiterkörper (12, 26, 38, 94, 96, 98, 100) aus Kunststoff an das Fahnenmaterial (68, 102) entlang der Längsrichtung des Fahnenmaterials (68, 102);
c) Schneiden des Fahnenmaterials (68, 102) quer zur Längsrichtung des Fahnenmaterials (68, 102), wobei durch das Schneiden zumindest ein einzelnes Führungselement (10, 36, 76, 78, 86, 88, 90, 92, 116, 124, 132) abgetrennt wird.

7. Verfahren nach Anspruch 6, **dadurch gekennzeichnet, dass** mehrere Führungselemente (10, 36, 76, 78, 86, 88, 90, 92, 116, 124, 132) zunächst einteilig an das Fahnenmaterial (68, 102) angespritzt werden und im Verfahrensschritt c) getrennt werden.

8. Flächige Schutzeinrichtung mit einer in einer Wickelrichtung aufrollbaren Flächenbahn (74), wobei zumindest an einem Randbereich der Flächenbahn (74) mehrere Halteteile (10, 24, 25, 36, 76, 78, 86, 88, 90, 92, 112, 118, 126, 134) gemäß einem der Ansprüche 1 - 5 angeordnet oder ausgebildet sind, deren Führungselemente (12, 26, 38, 94, 96, 98, 100, 116, 124, 132) in einer Führungsschiene der flächigen Schutzeinrichtung geführt sind.

## Claims

1. A holding part (10, 24, 25, 36, 76, 78, 86, 88, 90, 92, 112, 118, 126, 134) for a flat protective device, said holding part (10, 24, 25, 36, 76, 78, 86, 88, 90, 92, 112, 118, 126, 134) comprising: a first flag (14, 104, 106, 108, 110, 114, 120, 128, 136) made of a flat material and a guide element (12, 26, 38, 94, 96, 98, 100, 116, 124, 132) that is attached to the first flag (14, 104, 106, 108, 110, 114, 120, 128, 136), the first flag (14, 104, 106, 108, 110, 114, 120, 128, 136) being capable of being connected to a flat web (74) of the protective device via an adhesive bond and/or via a material connection, **characterised in that** the guide element (116, 124, 132) is realised in the form of a slider body (12, 38, 94, 96, 98, 100) made of plastic that is injection moulded onto the first flag (14, 104, 106, 108, 110, 114, 120, 128, 136).

2. The holding part according to claim 1, **characterised in that** the guide element (12, 26, 38, 94, 96, 98, 100, 134) surrounds an insert (70, 71, 140).

3. The holding part according to any one of the preceding claims, **characterised in that** the slider body (12) includes at least one bent sliding surface (20, 22).

4. The holding part according to any one of the preceding claims, **characterised in that** the slider body (38, 94, 96, 98, 100) includes at least one resilient sliding surface (40, 42).

5. The holding part according to any one of claims 2 to 4, **characterised in that** a holding cord (70) or a holding bar is envisaged as the insert (140).

6. A method for producing holding parts according to any one of claims 1 to 5, having the method steps of:
a) providing at least one flag material (68, 102) made of a flat material having at least one surface portion made of a thermoplastic material (72), the flag material (68, 102) comprising at least one flag (14, 16, 104, 106, 108, 110, 114, 120, 122, 128, 130, 136, 138) for connecting the guide element (10, 36, 76, 78, 86, 88, 90, 92, 116, 124, 132, 140) to a flat web (74);
b) injection moulding several slider bodies (12, 26, 38, 94, 96, 98, 100) made of plastic onto the flag material (68, 102) along the longitudinal direction of the flag material (68, 102);
c) cutting the flag material (68, 102) at right angles to the longitudinal direction of the flag material (68, 102), at least one individual guide element (10, 36, 76, 78, 86, 88, 90, 92, 116, 124, 132) being cut off by way of said cutting step.

7. The method according to claim 6, **characterised in that** several guide elements (10, 36, 76, 78, 86, 88, 90, 92, 116, 124, 132) are initially injection moulded onto the flag material (68, 102) in one piece and are separated in method step c).

8. A flat protective device having a flat web (74) that can be wound up in a winding direction, wherein at least in one edge region of the flat web (74), several holding parts (10, 24, 25, 36, 76, 78, 86, 88, 90, 92, 112, 118, 126, 134) in accordance with any one of the claims 1 - 5 are arranged or realised, whose guide elements (12, 26, 38, 94, 96, 98, 100, 116, 124, 132) are guided in a guide rail of the flat protective device.

## Revendications

1. Pièce de retenue (10, 24, 25, 36, 76, 78, 86, 88, 90, 92, 112, 118, 126, 134) pour un dispositif de protection plat, ledit élément de retenue (10, 24, 25, 36, 76, 78, 86, 88, 90, 92, 112, 118, 126, 134) comprenant : un premier drapeau (14, 104, 106, 108, 110, 114, 120, 128, 136) se composant d'un matériau plat, et un élément de guidage (12, 26, 38, 94, 96, 98, 100, 116, 124, 132) qui est attaché au premier drapeau (14, 104, 106, 108, 110, 114, 120, 128, 136), le premier drapeau (14, 104, 106, 108, 110, 114, 120, 128, 136) pouvant être relié à une bande plate (74) du dispositif de protection à l'aide d'un joint adhésif et/ou à l'aide d'une liaison par matière, **caractérisée en ce que** l'élément de guidage (116, 124, 132) est réalisé sous la forme d'un corps de glissement (12, 38, 94, 96, 98, 100) en matière plastique qui est moulé par injection au premier drapeau (14, 104, 106, 108, 110, 114, 120, 128, 136).

2. Pièce de retenue selon la revendication 1, **caractérisée en ce que** l'élément de guidage (12, 26, 38, 94, 96, 98, 100, 134) enserre un insert (70, 71, 140).

3. Pièce de retenue selon l'une quelconque des revendications précédentes, **caractérisée en ce que** le corps de glissement (12) présente au moins une surface de glissement (20, 22) courbée.

4. Pièce de retenue selon l'une quelconque des revendications précédentes, **caractérisée en ce que** le corps de glissement (38, 94, 96, 98, 100) présente au moins une surface de glissement (40, 42) à élasticité par ressort.

5. Pièce de retenue selon l'une quelconque des revendications 2 à 4, **caractérisée en ce qu'**un cordon de retenue (70) ou une barre de retenue est prévu(e) comme l'insert (140).

6. Procédé de fabrication de pièces de retenue selon l'une quelconque des revendications 1 à 5, ayant les étapes de procédé suivantes :
a) fournir au moins un matériau de drapeau (68, 102) se composant d'un matériau plat ayant au moins une partie de surface en matière thermoplastique (72), le matériau de drapeau (68, 102) comprenant au moins un drapeau (14, 16, 104, 106, 108, 110, 114, 120, 122, 128, 130, 136, 138) pour relier l'élément de guidage (10, 36, 76, 78, 86, 88, 90, 92, 116, 124, 132, 140) à une bande plate (74) ;
b) mouler plusieurs corps de glissement (12, 26, 38, 94, 96, 98, 100) en matière plastique par injection au matériau de drapeau (68, 102), le long de la direction longitudinale du matériau de drapeau (68, 102) ;
c) couper le matériau de drapeau (68, 102) en travers de la direction longitudinale du matériau de drapeau (68, 102), au moins un élément de guidage (10, 36, 76, 78, 86, 88, 90, 92, 116, 124, 132) individuel étant séparé moyennant ladite étape de couper.

7. Procédé selon la revendication 6, **caractérisé en ce que** plusieurs éléments de guidage (10, 36, 76, 78, 86, 88, 90, 92, 116, 124, 132) sont d'abord moulés par injection au matériau de drapeau (68, 102) en une pièce et sont séparés dans l'étape de procédé c).

8. Dispositif de protection plat ayant une bande plate (74) qui peut être enroulée dans une direction d'enroulement, dans lequel, au moins sur une zone de bord de la bande plate (74), plusieurs pièces de retenue (10, 24, 25, 36, 76, 78, 86, 88, 90, 92, 112, 118, 126, 134) conformément à l'une quelconque des revendications 1 - 5 sont disposées ou réalisées, les éléments de guidage (12, 26, 38, 94, 96, 98, 100, 116, 124, 132) desdites pièces de retenue étant guidés dans un rail de guidage du dispositif de protection plat.
